# EUROPEAN PATENT APPLICATION

(11) **EP 4 520 774 A1**
(43) Date of publication of application: **12.03.2025**
(21) Application number: 23196617.7
(22) Date of filing: 11.09.2023
(51) Int. Cl.: C08G 59/50

(54) **USE OF ACRYLATES IN EPOXY SYSTEMS**

(71) Applicant: Sika Technology AG, 6340 Baar (CH)
(72) Inventor: TAVARES, Clarisse, 75016 Paris (FR); PARENT, Arnaud, 95280 Jouy le Moutier (FR); LEBOEUF, Bertrand, 95310 St-Ouen L'Aumone (FR); ORIAL, Josselin, 78250 Hardricourt (FR)
(74) Representative: Sika Patent Attorneys

(57) **Abstract**

An epoxy resin composition comprises:
a) a resin component comprising at least one epoxy resin and at least one acrylate compound, whereby a weight ratio of the at least one acrylate compound to the at least one epoxy resin is from 0.01 - 1, especially 0.05 - 0.7, in particular 0.1 - 0.5;
b) a hardener component comprising at least one amine compound having at least one amine group selected from primary amine groups, secondary amine groups and/or blocked amine groups.

## Description

### Technical field

The invention relates to an epoxy resin composition comprising an epoxy-based resin component and an amine-based hardener component. A further aspect of the invention is directed to a method for casting an article from an epoxy resin composition and an article obtained from the epoxy resin composition. Also, the invention is directed to the use of a specifically selected compound for controlling, especially for reducing, the heat evolution during a curing process of an epoxy resin composition.

### Background art

Epoxy resin compositions curing at ambient temperatures by way of amine hardeners are widely used as casting resins, coatings, or adhesives. An example of a casting resin application is the manufacture of transparent, hard and tough resinous articles, which have a glass-like appearance and can be used for functional and/or decorative purposes. Such casting resins allow to incorporate shaped materials, for example pieces of wood or stone, and make them appear in a shiny and highly aesthetic way. For such an application, the casting resin should be applicable in thick layers such as at least 5 to 50 mm and, after curing, have a high glass transition temperature (Tg), preferably above 40°C, preferably at least 45°C, and a high clarity, i.e., be completely transparent without any haziness, turbidity, or other kind of visible inhomogeneity. This is not easy to achieve, as many amine hardeners tend to cause a hazy or turbid appearance. Furthermore, the epoxy curing reaction is highly exothermic and therefore, the freshly mixed resin tends to overheat when applied in thick layers, which can lead to discolorations and/or bubbles. To achieve an aesthetically good result, usually hardeners are used, which, upon reaction with the epoxy resin, generate only a moderate heat peak, at still fast and reliable curing, without the formation of any haziness within the cured resin or on its surface. Finally, the cured transparent article should have a high robustness against yellowing in order not to lose its original look upon exposure to light.

Epoxy resin compositions for such a use are known in the market. They typically contain high amounts of alkylphenols, such as nonylphenol. Alkylphenols are diluents and entail to the resin a high clarity and a low heat generation at still fast and reliable curing, but they are toxic compounds for humans and the environment, requiring special safety measures for their handling. Furthermore, alkylphenols and other type of diluents remain unreacted in the cured resin and can be released therefrom by way of migration, extraction, or evaporation, which is exacerbating their toxicity. In addition, they may also have an undesired softening effect on the cured resin, which is lowering the Tg. Furthermore, some of the known epoxy compositions can only be cast in rather thin layers if aesthetically pleasing articles are to be produced.

In this regard, US 2022/0411571 A1 (Sika Technology AG) described for example a special hardener for epoxy resins that is based on at least one amine and an amine-functional adduct of at least one polyoxyalkylene polyamine and a diepoxide. The hardener enables transparent epoxy resin compositions of high clarity, which are free of toxic diluents such as nonylphenol, upon curing show a low heat generation but still cure fast and reliably and have a high robustness against yellowing. Such epoxy resin compositions are particularly suitable as casting resin for the manufacturing of transparent articles with a glass-like appearance. Although this solution is beneficial, it requires a special hardener.

There is thus still a need to develop new and improved solutions, which reduce or overcome the aforementioned drawbacks.

### Disclosure of the invention

It is an object of the present invention to provide solutions that allow for producing improved epoxy compositions suitable for casting resins. In particular, the epoxy compositions should enable the production of homogeneous cast articles, in particular with a high clarity, a high Tg, good mechanical properties and/or a high robustness against yellowing.

Surprisingly, it has been found that the object of the invention can be solved by the epoxy resin composition according to claim 1.

As has been shown, when adding a certain proportion of an acrylate compound to the resin component, epoxy resin articles can be produced that are robust against yellowing, highly homogenous and essentially free of visible discolorations and bubbles.

Without being wished to be bound to the theory, it is believed that the use of acrylates in the resin component reduces heat evolution during the curing process of the at least one epoxy resin. Presumably, this is caused by a rather fast initial Michael addition reaction between the acrylates and the at least one amine compound in the hardener component resulting in the formation of a first molecular network in the curing epoxy composition. This in turn leads to a certain slowdown of the highly exothermic reaction between the at least one amine compound and the epoxy groups of the at least one epoxy resin. Thereby, surprisingly, the rheological properties during the curing reaction and the mechanical properties of the cured epoxy composition hardly are affected. In particular, shrinkage can be reduced when compared to composition without any acrylates.

Also, the inventive epoxy composition allows for higher casting volumes with layer thicknesses of 100 mm or more in one pass.

Further aspects of the invention are the subject matter of other independent claims. Especially preferred embodiments of the invention are outlined throughout the description or the subject matter of the dependent claims.

### Ways of carrying out the invention

A first aspect of the invention relates to an epoxy resin composition comprising:
a) a resin component comprising at least one epoxy resin and at least one acrylate compound, whereby a weight ratio of the at least one acrylate compound to the at least one epoxy resin is from 0.01 - 1, especially 0.05 - 0.7, in particular 0.1 - 0.5;
b) a hardener component comprising at least one amine compound having at least one amine group selected from primary amine groups, secondary amine groups and/or blocked amine groups.

In this document, the term "primary amine group" refers to an NH₂ group bound to an organic moiety, and the term "secondary amine group" refers to an NH group bound to two organic moieties, which together may be part of a ring.

A "blocked amine group" in particular is meant to be an aldimine or ketimine group. These are condensation products of primary amine groups and aldehydes or ketones, respectively. Aldimines and ketimines can hydrolyze to form the corresponding amines and aldehydes or ketones, respectively.

The term "open time" or "potlife" in the present document indicates the duration of processability of the freshly mixed composition. The end of the open time is usually associated with a viscosity increase of the composition such that processing is no longer possible without defects of performance.

Substance names beginning with "poly", such as polyacrylate, polyol or polyamine, denote substances which formally contain two or more of the functional groups that occur in their name per molecule.

The term "molecular weight" in this document is understood to be the molar mass of a molecule in g/mol. "Average molecular weight" is the numerical average Mₙ of an oligomeric or polymeric mixture of molecules and is determined customarily by means of gel permeation chromatography (GPC) against polystyrene as standard.

The epoxy resin composition of the invention preferably comprises two or more individual components, in particular the resin component and the hardener component, as described, and possibly one or more further components. Thus, the epoxy resin composition in particular is a 2-component composition having two individual components or a multi-component composition having 3 or more individual components.

The components in particular are stored separately in order to avoid spontaneous reaction. The components may be assembled together as a package. For the use of the epoxy resin composition, the components can be combined with each other. When the components are mixed with each other, the curing reaction starts, and the composition is to be applied within the open time after mixing of the components.

The acrylate compound in particular is an acrylate compound with a functionality of 1 - 5, especially 1 - 3, in particular 1 - 2. Put differently, the at least one acrylate compound in particular comprises 1 - 5, especially 1 - 3, in particular 1 - 2 acryl groups of formula CH₂=CHCOO-.

In a preferred embodiment the at least one acrylate compound does not comprise any methacryl groups of formula CH₂=C(CH₃)COO-.

In particular, the at least one acrylate compound does not contain an acid group, especially selected from a carboxyl group, a phosphoric acid group and a sulfonic acid group, and it does not contain primary or secondary amine groups. Such acrylate compounds are storage stable in the presence of an epoxy resin.

In case the at least one acrylate compound contains hydroxyl groups, the functionality with respect to hydroxyl groups preferably is not higher than 1.

Especially, the at least one acrylate compound does not any comprise any epoxy group.

Especially preferred, the at least one acrylate compound is an aliphatic alkyl acrylate, whereby the aliphatic alkyl group of the alkyl acrylate may be branched or unbranched and optionally comprise one or more heteroatoms, in particular oxygen. The aliphatic alkyl group in particular is saturated.

In particular, an average molecular weight of the at least one acrylate compound is less than 2'000 g/mol, preferably less than 1'000 g/mol, more preferably less than 700 g/mol. Especially, the average molecular weight is in the range of 100 - 800 g/mol, especially 200 - 600 g/mol.

A suitable acrylate compound with an acrylate functionality of 1 is preferably an acrylate of a primary alcohol with an OH-functionality of 1, whereby the primary alcohol is preferably selected from fatty alcohols, especially having 10 - 15 carbon atoms. Examples of such fatty alcohols are 1-dodencanol, 1-tridecanol, 1-tetradecanol or mixtures thereof.

In particular, an acrylate compound with an acrylate functionality of 2 is preferably an acrylate of a diol with an OH-functionality of 2, whereby the diol is preferably an aliphatic diol, especially a saturated aliphatic diol, for example selected from 3-methyl 1,5-pentanediol and/or 1,10-decanediol.

A suitable acrylate compound with an acrylate functionality of 3 or more is preferably a polyacrylate of a polyol with an OH-functionality of 3 or more, whereby the polyol is preferably selected from the list consisting of glycerin, trimethylolpropane, di(trimethylolpropane), pentaerythritol, di(pentaerythritol) and alkoxylated versions of these polyols. Alkoxylated polyols are preferably selected from ethoxylated glycerin, propoxylated glycerin, ethoxylated trimethylolpropane and propoxylated trimethylolpropane. In the case of alkoxylated polyols, a low degree of alkoxylation is preferred, in order to end up with an average molecular weight of the alkoxylated polyol of less than 2'000 g/mol, preferably less than 1'000 g/mol, more preferably less than 700 g/mol.

The at least one acrylate compound in particular is selected from:
- monoacrylates, especially from lauryl acrylate, C₁₂-C₁₄ alkyl acrylate, and/or tridecyl acrylate;
- diacrylates, especially from 3-methyl 1,5-pentanediol diacrylate, and/or 1,10-decanediol diacrylate;
- triacrylates, especially from trimethylolpropane triacrylate (TMPTA), pentaerythritol triacrylate and/or ethoxylathed 3-trimethylolpropane triacrylate
- tetraacrylates, especially pentaerythritol tetraacrylate and/or ditrimethylolpropane tetraacrylate;
   and/or
- pentaacralytes, especially dipentaerythritol pentaacrylate (DPHA).

In a special embodiment, the at least one acrylate compound is selected from dipentaerythritol pentaacrylate and/or trimethylolpropane triacrylate.

The at least one epoxy resin is preferably a liquid epoxy resin or a mixture of two or more liquid epoxy resins.

The term "liquid epoxy resin" especially means a polyepoxide with a glass transition temperature of below 25° C.

Optionally, a resin component comprising at least one liquid epoxy resin may further contain minor amounts of a solid epoxy resin.

Particularly suitable epoxy resins are aromatic epoxy resins, particularly glycidylization products of bisphenol A, bisphenol F and/or bisphenol A/F; resorcinol, hydroquinone or catechol; further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert.butylphenyl)propane, 2,2-bis(4-hydroxyphenyl)butane (bisphenol B), 3,3-bis(4-hydro-xyphenyl)pentane, 3,4-bis(4-hydroxyphenyl)hexane, 4,4-bis(4-hydroxyphenyl)-heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]-benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxy-naphthalene, tris(4-hydroxyphenyl)methane, 1,1,2,2-tetrakis(4-hydroxyphenyl)-ethane, bis(4-hydroxyphenyl)ether or bis(4-hydroxyphenyl)sulfone; novolaks, which are preferably products of the condensation of phenols or cresols with formaldehyde, paraformaldehyde, acetaldehyde, crotonaldehyde, isobutyraldehyde, 2-ethylhexanal, benzaldehyde or furfuraldehyde; aromatic amines such as aniline, toluidine, 4-aminophenol, 4,4'-methylenediphenyldiamine, 4,4'-methylenediphenyldi-(N-methyl)amine, 4,4'-[1,4-phenylen-bis(1-methylethyliden)]bisaniline (bisaniline P) or 4,4'-[1,3-phenylen-bis(1-methylethyliden)]bisaniline (bisaniline M).

Suitable liquid epoxy resins are further aliphatic or cycloaliphatic polyepoxides, particularly glycidyl ethers of di-, tri- or tetrafunctional C2- to C30-alcohols, particularly ethylene glycol, propylene glycol, butylene glycol, hexanediol, octanediol, polypropylene glycols, dimethylolcyclohexane, neopentyl glycol, dibromoneopentyl glycol, castor oil, trimethylolpropane, trimethylolethane, pentaerythritol, sorbitol or glycerol, or alkoxylated glycerol or alkoxylated trimethylolpropane; a hydrogenated bisphenol A, F or A/F liquid resin, or the glycidylization product of a hydrogenated bisphenol A, F or A/F; a N-glycidyl derivate of an amide or a heterocyclic nitrogen base, such as triglycidyl cyanurate or triglycidyl isocyanurate, or reaction products of epichlorohydrin with hydantoin; epoxy resins from the oxidation of olefins, such as vinylcylohexene, dicyclopentadiene, cyclohexadiene, cyclododecadiene, cyclododecatriene, isoprene, 1,5-hexadiene, butadiene, polybutadiene or divinylbenzene.

The epoxy resin of the resin component is preferably an aromatic liquid epoxy resin based on a bisphenol. In particular, the epoxy resin is selected from the group consisting of a bisphenol A-diglycidyl ether, bisphenol F-diglycidyl ether and/or bisphenol A/F-diglycidyl ether. These resins are low viscous and enable a fast curing and a high hardness.

Optionally the resin component contains minor amounts of a solid bisphenol A resin and/or novolak glycidyl ethers.

In a further preferred embodiment, the epoxy resin further comprises a diluent that is chemically different form the at least one acrylate compound.

Preferred are diluents with a boiling point of more than 200°C.

Preferably, the resin component comprises at least one reactive diluent, especially a diglycidyl ether. Such a reactive diluent improves processability without affecting the strength too much.

Especially, the diluent is an epoxy functional reactive diluent, particularly selected from the group consisting of butandiol diglycidyl ether, neopentylglycol diglycidyl ether, hexandiol diglycidyl ether, cyclohexanedimethanol diglycidyl ether, trimethylolpropane di- or triglycidyl ether, phenyl glycidyl ether, cresyl glycidyl ether, guiacol glycidyl ether, 4-methoxyphenyl glycidly ether, p-n-butylphenyl glycidyl ether, p-tert.butylphenyl glycidyl ether, 4-nonylphenyl glycidyl ether, 4-dodecylphenyl glycidyl ether, cardanol glycidyl ether, benzyl glycidyl ether, allyl glycidyl ether, butyl glycidyl ether, hexyl glycidyl ether, 2-ethylhexyl glycidyl ether and glycidyl ethers of natural alcohols such as C8 to C10 alcohols, C12 to C14 alcohols and C13 to C15 alcohols.

Preferred thereof is butanediol diglycidyl ether, neopentylglycol diglycidyl ether, hexanediol diglycidyl ether, p-tert butylphenyl glycidyl ether, a C12 to C14-or C13 to C15 alkyl glycidyl ether, or mixtures thereof.

Other diluents can be chosen from xylene, 2-methoxyethanol, dimethoxyethanol, 2-ethoxyethanol, 2-propoxyethanol, 2-isopropoxyethanol, 2-butoxyethanol, 2-phenoxyethanol, 2-benzyloxyethanol, benzyl alcohol, ethylene glycol, ethylene glycol dimethyl ether, ethylene glycol diethyl ether, ethylene glycol dibutyl ether, ethylene glycol diphenyl ether, diethylene glycol, diethylene glycol monomethyl ether, diethylene glycol monoethyl ether, diethylene glycol mono-n-butyl ether, diethylene glycol dimethyl ether, diethylene glycol diethyl ether, diethylene glycol di-n-butyl ether, propylene glycol butyl ether, propylene glycol phenyl ether, dipropylene glycol, dipropylene glycol monomethyl ether, dipropylene glycol dimethyl ether, dipropylene glycol di-n-butyl ether, diphenylmethane, diisopropylnaphthalene, petroleum fractions such as Solvesso^{®} grades (from Exxon), cardanol (from cashew nutshell oil, containing as main constituent 3-(8,11-pentadecadienyl)-phenol), styrenated phenol, bisphenols, aromatic hydrocarbon resins, particularly those containing phenol groups, alkoxylated phenols, particularly ethoxylated or propoxylated phenols, particularly 2-phenoxyethanol, adipates, sebacates, phthalates, benzoates, organic phosphoric or sulfonic acid esters or sulfonamides.

The at least one amine compound in particular is an aliphatic, cycloaliphatic or arylaliphatic polyamine, especially with (i) at least two primary amine groups or (ii) with at least one primary and at least one secondary amine group. In particular, the polyamine comprises 2, 3 or 4 amine groups.

An "arylaliphatic polyamine" is meant to be a polyamine having an aliphatic structure containing at least one aryl group inside.

An average molecular weight of the at least one polyamine in particular is less than 2'000 g/mol, especially less than 1'000 g/mol, e.g. in the range of 170 to 500 g/mol.

For example, the at least one amine compound is selected from 2,2-dimethyl-1,3-propanediamine, 1,3-pentanediamine (DAMP), 1,5-pentanediamine, 1,5-diamino-2-methylpentane (MPMD), 2-butyl-2-ethyl-1,5-pentanediamine (C11-neodiamine), 1,6-hexanediamine, 2,5-dimethyl-1,6-hexanediamine, 2,2(4),4-trimethyl-1,6-hexanediamine (TMD), 1,7-heptanediamine, 1,8-octanediamine, 1,9-nonanediamine, 1,10-decanediamine, 1,11-undecanediamine, 1,12-dodecanediamine, 1,2-, 1,3- or 1,4-diaminocyclohexane, 1,3-bis(aminomethyl)cyclohexane, 1,4-bis(aminomethyl)-cyclohexane, bis(4-aminocyclohexyl)methane, bis(4-amino-3-methylcyclohexyl)-methane, bis(4-amino-3-ethylcyclohexyl)methane, bis(4-amino-3,5-dimethylcyclohexyl)methane, bis(4-amino-3-ethyl-5-methylcyclohexyl)methane, 1-amino-3-aminomethyl-3,5,5-trimethylcyclohexane (isophorondiamine or IPDA), 2(4)-methyl-1,3-diaminocyclohexane, 2,5(2,6)-bis(aminomethyl)bicyclo[2.2.1]heptane (NBDA), 3(4),8(9)-bis(aminomethyl)tricyclo[5.2.1.02,6]decane, 1,4-diamino-2,2,6-trimethylcyclohexane (TMCDA), 1,8-menthanediamine, 3,9-bis(3-aminopropyl)-2,4,8,10-tetraoxaspiro[5.5]undecane, 1,3-bis(aminomethyl)benzene (MXDA), 1,4-bis(aminomethyl)benzene, bis(2-aminoethyl)ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine or higher oligomers of these diamines, bis(3-aminopropyl)-polytetrahydrofurane or other polytetrahydrofuranediamines, polyoxyalkylen di- or - triamines, particularly Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000 or Jeffamine^{®} T-5000 (all from Huntsman), bis(6-aminohexyl)amine (BHMT), diethylenetriamine (DETA), triethylenetetramine (TETA), tetraethylenepentamine (TEPA), pentaethylenehexamine (PEHA) or higher homologues thereof, dipropylenetriamine (DPTA), N-(2-aminoethyl)-1,3-propanediam in (N3-Amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine, N,N'-bis(3-amino-1-ethylpropyl)-2-methyl-1,5-pentanediamine, or adducts of these polyamines with monoepoxides or diepoxides.

Also suitable are N-benzyl-1,2-ethanediamine, N-benzyl-1,2-propanediamine, N-benzyl-2-methyl-1,5-pentanediamine, N-benzyl-1,3-bis(aminomethyl)benzene, N-(2-ethylhexyl)-1,3-bis(aminomethyl)benzene, 2-aminoethylpiperazine, 3-dimethylaminopropylamine (DMAPA), 3-(3-(dimethylamino)propylamino)-propylamine (DMAPAPA), N-benzyldiethylenetriamine, N-benzyltriethylene-tetramine, N"-benzyl-N,N'-bis(3-aminopropyl)ethylenediamine, or adducts of these polyamines with monoepoxides or diepoxides.

In a further preferred embodiment, the at least one amine compound comprises or consists of a diamine and/or a triamine, especially a polyoxyalkylene diamine and/or a polyoxyalkylene triamine.

Especially, the at least one amine compound is selected from polyoxypropylene diamine, e.g. with an average molecular weight in the range of 170 to 500 g/mol, such as Jeffamine^{®} D-230 or Jeffamine^{®} D-400 (both from Huntsman); or a polyoxypropylene triamine, e.g. with an average molecular weight in the range of 300 to 500 g/mol, such as Jeffamine^{®} T-403 (from Huntsman).

In a preferred embodiment, the at least one epoxy resin comprises or consists of a bisphenol A-diglycidyl ether and the at least one acrylate compound comprises or consists of a triacrylate or a pentaacrylate. In this case, preferably, the at least one amine compound may comprise or consist of a triamine, especially a polyoxypropylene triamine.

In another preferred embodiment, the at least one epoxy resin comprises or consists of a bisphenol A-diglycidyl ether, the at least one acrylate comprises or consists of a monofunctional acrylate and the at least one amine compound comprises or consists of a triamine, especially a polyoxyalkylene triamine. Inter alia, such compositions are highly stable against yellowing.

A weight proportion of the at least one epoxy resin to the sum of the weight of the at least one acrylate compound and the optional diluent, especially a reactive diluent, preferably is > 50 wt.%, especially > 60 wt.%, in particular > 65 wt.%, for example 70 - 95 wt.%.

In particular, the resin component, with respect to the total weight of the resin component, comprises:
(i) 50 - 99 wt.%, especially 60 - 95 wt.%, in particular 70 - 92 wt.%, for example 75 - 85 wt.%, of the at least one epoxy resin;
(ii) 1 - 50 wt.%, especially 5 - 40 wt.%, in particular 8-30 wt.%, for example 15 - 25 wt.%, of the at least one acrylate compound;
(iii) 0 - 40 wt.%, especially 1 -30 wt.%, in particular 5 - 28 wt.%, for example 15 - 25 wt.%, of the diluent.

The hardener component, with respect to the total weight of the hardener component, preferably comprises 50 - 100 wt.%, especially 70 - 100 wt.%, in particular 90 - 100 wt.%, for example 100 wt.%, of the at least one amine compound.

In particular, a weight ratio between the hardener component and the resin component is in the range from 1:10 to 10:1, especially 2:10 to 10:10, in particular 3:10 to 6:10, for example 3.5:10 to 5:10.

In a preferred embodiment, a molar ratio of the sum of the acryl groups (CH₂=CHCOO-) of the at least one acrylate compound and the epoxy groups of the at least one epoxy resin and any further groups that are reactive towards the amine groups of the at least one amine compound, especially the optional epoxy functional reactive diluent, to the number of amine groups of the at least one amine compound is in the range of 0.5 to 1.5, particularly 0.7 to 1.2.

Especially preferred, the epoxy resin composition is formulated such that in cured state it is transparent for light in the visible spectrum. Preferably, such a composition contains at least one stabilizer against light or UV radiation.

In particular, with respect to the total weight of the epoxy resin composition, a weight proportion of fillers in the epoxy resin composition is 0 - 2 wt.%, in particular 0 - 1 wt.%, especially 0 wt.%.

Preferably, the resin component has a color index according to the Platinum-Cobalt scale below 40, especially below 25, in particular below 20, especially below 15 (measured according to DIN EN ISO 6271:2016-05). This is a common method of comparison of the intensity of yellow-tinted samples. The smaller the value, the less yellow the resin component is. This helps to reduce yellowing of the cured sample.

The epoxy resin composition may contain further ingredients.

A possible further ingredient is an accelerator, preferably salicylic acid, p-toluenesulfonic acid, methyl p-toluene sulfonate, calcium nitrate, 2,4,6-tris(dimethylaminomethyl)phenol or combinations thereof.

Another preferred further ingredient is an additive, such as a surfactant, stabilizer against oxidation, heat, light or UV-radiation, and/or a biocide.

Further optional ingredients are further reactive diluents such as epoxidized soybean oil, epoxidized linseed oil, acetoacetylated polyols, butyrolactone, carbonates, aldehydes, isocyanates or silicones with reactive groups, solvents, further amines, substances with mercapto groups, polymers, fumed silica, fibres such as glass fibres, polyamide fibres of polyethylene fibres, hollow spheres out of glass, rheology modifiers, adhesion promoters such as organoalkoxysilanes, or flame retarders.

A non-transparent epoxy resin composition according to the invention may contain further ingredients, particularly fillers such as calcium carbonates, optionally surface treated with a fatty acid, barites, talc, quartz flour, quartz sand, silicon carbide, iron mica, dolomites, wollastonites, kaolins, mica, molecular sieves, aluminium oxides, aluminium hydroxides, magnesium hydroxide, silicas, cement, gypsum, fly ashes, carbon black, graphite, metal powders, PVC powder or hollow spheres, and/or pigments such as titanium dioxide or iron oxides, and/or fibres or nano materials such as carbon fibres, metallic fibres, ceramic fibres or carbon nanotubes.

In this document, the term "filler" in particular means a solid, granular substance which is insoluble in the composition.

A transparent epoxy resin composition according to the invention may further contain dyes in order to get a transparent colored look, for example blueish or greenish or reddish, similar to colored glass.

Especially, as mentioned above, the resin component and the hardener component of the epoxy resin composition each stored in separate containers. Further ingredients of the epoxy resin composition can be part of the resin component and/or of the hardener component, whereas ingredients which are reactive towards amines are part of the resin component and ingredients which are reactive towards epoxides are part of the hardener component.

A suitable container for storing the resin component or the hardener component is particularly a drum, a hobbock, a pouch, a bucket, a pail, a canister, a cartridge or a tube.

In particular, each component is stable upon storage. This means it can be kept for several months up to a year or more before use without suffering alteration in its properties to any extent relevant for its use.

For the use of the epoxy resin composition, the resin component, the hardener component and, if present, further components are mixed with each other shortly before or during the application.

Thus, another aspect of the present invention is directed to a method of mixing the components of the epoxy resin composition as described herein.

The mixing ratio of the components preferably is selected as described above.

The components can be mixed with each other by means of any suitable method. This may take place continuously or batchwise. If mixing takes place prior to application, it should be ensured not to let elapse too much time between the mixing of the components and the application to ensure application within the pot life. Mixing takes place preferably at ambient or slightly elevated temperatures, particularly in the range from 10 to 50°C, preferably 15 to 30°C, in particular 15 to 25°C.

Curing of the epoxy resin composition starts by chemical reaction upon mixing of the components, as described above. Curing typically takes place at a temperature in the range from 10 to 150°C, preferably at ambient temperatures. If desired, a post curing can be done at elevated temperatures, preferably in the range from 50 to 150°C. The time to cure is dependent on factors including temperature, reactivity of the reactive ingredients and their stoichiometry and the presence of accelerators and/or diluents.

The inventive epoxy resin composition in particular is configured such that after curing it has a high Tg. Preferably the Tg, measured by thermomechanical analysis (TMA) in line with ISO 11359-2:2021-11 is higher than 35°C, more preferably higher than 40°C, particularly at least 45°C. Such a material is durable and stable at ambient conditions.

Another aspect of the invention is directed to a method for casting an article comprising the steps of:
(i) mixing the components of the epoxy resin composition as described above,
(ii) pouring the mixed composition within its pot life into a mould in a layer thickness of at least 1 mm, especially in the range of 5 to 200 mm,
(iii) optionally mixing another portion of the components of the epoxy resin composition as described in step (i), followed by pouring another layer of the mixed composition within its pot life onto the already applied, at least partly cured layer,
(iv) optionally repeating step (iii) until the article has reached its desired thickness,
(v) curing the cast article.

In step (i) the mixing preferably is performed as described above in connection with the method of mixing.

In step (ii), the mixed composition is poured into the mould in one pass until the defined layer thickness is achieved. Especially, in step (ii) the mixed composition is poured into the mould in a layer thickness of at least 50 mm, in particular at least 100 mm. Such an approach with rather high layer thicknesses is possible thanks to the epoxy composition according to the invention.

In a special embodiment, optional steps (iii) and (iv) are omitted. In this case, the whole article can be produced in one pass. Overall, this improves the homogeneity and quality of the article to be produced.

An additional aspect of the present invention is related to an article, preferably selected from the group consisting of a painting, a collage, a paperweight, a decorative globe, a tray, a decorative dish, a table board and a side table, comprising an epoxy resin composition as described herein in cured state or comprising a cured epoxy resin composition obtainable by the methods as described above.

A still further aspect of the invention is related the use of at least one acrylate compound for controlling, especially for reducing, the heat evolution during a curing process of an epoxy resin composition comprising a) a resin component comprising at least one epoxy resin and b) a hardener component comprising at least one amine compound having at least one amine group selected from primary amine groups, secondary amine groups and/or blocked amine groups.

Another aspect of the invention is directed to the use of at least one acrylate compound for reducing yellow discoloration of an epoxy resin composition comprising a) a resin component comprising at least one epoxy resin and b) a hardener component comprising at least one amine compound having at least one amine group selected from primary amine groups, secondary amine groups and/or blocked amine groups.

With these uses, the at least one acrylate compound in particular is added to and/or present in the resin component of the epoxy resin composition before and/or during curing.

Thereby, the at least one acrylate compound and the epoxy resin composition are defined as described above in connection with the epoxy resin composition according to the invention.

Further advantageous embodiments and combinations of features of the invention will emerge from the following exemplary embodiments and the totality of the patent claims.

### Brief description of drawings

The drawings used to explain the examples show:
- Fig. 1: The temperature evolution over time for the two different epoxy resin compositions during the curing process;
- Fig. 2: Photographs of transparent articles produce with the epoxy resin compositions of Fig. 1. The article on the left side that was produced with an epoxy resin composition according to the invention has a lower yellow discoloration (left side of Fig. 2) when compared with the reference sample (right side of Fig. 2);
- Fig. 3-5: The temperature evolution over time during the curing process of further epoxy resin compositions comprising different types of acrylates;
- Fig. 6: The temperature evolution over time during the curing process of other epoxy resin compositions;
- Fig. 7: The temperature evolution over time during the curing processes of two of the other epoxy resin compositions from Fig. 6 with larger batch sizes.

### Exemplary embodiments

### Substances and materials

For the exemplary embodiments, the substances and materials indicated in table 1 were used. "EEW" means epoxy equivalent weight. "AHEW" means amine hydrogen equivalent weight. If not otherwise stated, the used substances were from Sigma-Aldrich.

**Table 1**

| **Name** | **Substance/material** |
|---|---|
| BADGE | Liquid bisphenol A diglycidyl ether (epoxy resin; Epokukdo YD-128, Kukdo Chemical; EEW = 184-190 g/eq) |
| G8 | C12/C14-alkyl glycidyl ether (reactive diluent; Grilonit^{®} Epoxide 8; EEW = 270-299 g/eq) |
| SR351 | Trimethylolpropane triacrylate (Sartomer^{®} SR351, 296 g/mol (Arkema) |
| | 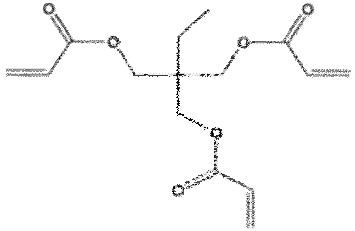 |
| SR489 | Tridecyl acrylate (Sartomer^{®} SR489, 255 g/mol) |
| | 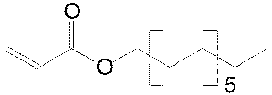 |
| SR335 | Lauryl acrylate (Sartomer^{®} SR335, 240 g/mol) |
| | 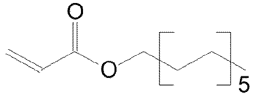 |
| SR336 | C12/C14 acrylate (Sartomer^{®} SR336, 250 g/mol) |
| | 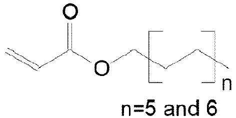 |
| SR595 | 1,10-decanediol diacrylate (Sartomer^{®} SR595, 282 g/mol) |
| | 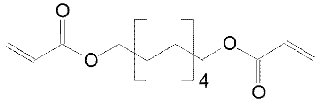 |
| SR341 | 3-methyl 1,5-pentanediol diacrylate (Sartomer^{®} SR341, 226 g/mol) |
| | 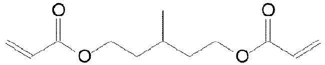 |
| SR355 | Ditrimethylolpropane tetraacrylate (Sartomer^{®} SR355, 466 g/mol) |
| | 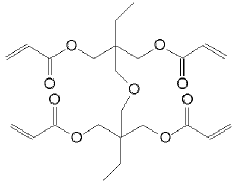 |
| SR399 | Dipentaerythritol pentaacrylate (Sartomer^{®} SR399, 525 g/mol) |
| | 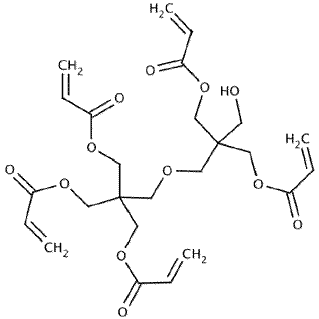 |
| T403 | Polyetheramine (JEFFAMINE^{®} T-403, Huntsman; AHEW 81 g/eq) |
| | 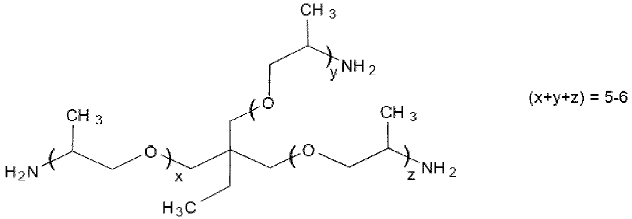 |
| PN | Propylated naphthalene (diluent; Ruetasolv^{®} DI, Rain Carbon Germany GmbH) |

### Example 1

A resin component and a hardener component as indicated in table 2 were provided in separate receptacles at room temperature (total amount: 1.2 kg). Then the two components were mixed together in order to start the curing process and poured into a conical mould with an inner depth of about 12 cm. During the curing process, the temperature evolution over time was measured with a thermocouple in the center of the curing epoxy resin composition.

**Table 2 (proportions in wt. %)**

| **Component** | **Constituent** | **R1*** | **A** |
|---|---|---|---|
| **Resin** | BADGE | 79.7 | 70.7 |
| | G8 | 19.9 | 18.9 |
| | SR399 | 0 | 10 |
| | Additives²⁾ | 0.4 | 0.4 |
| **Hardener** | T403 | 100 | 100 |
| **Ratio¹⁾** | | 100/45 | 100/45 |

| | | | |
|---|---|---|---|
| * = reference sample ¹⁾ = Weight ratio of resin component to hardener component ²⁾ = Processing additives | | | |

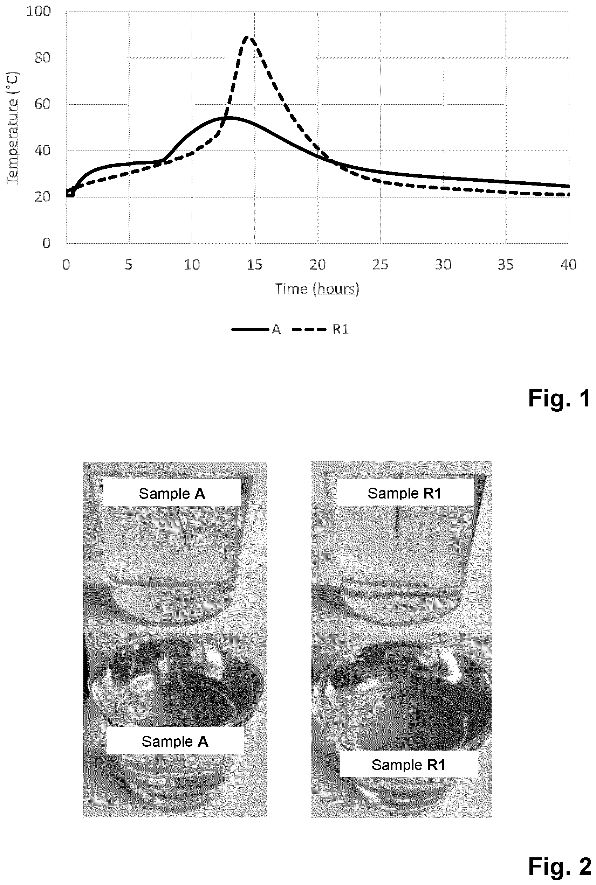

Fig. 1 shows the temperature evolution over time for the two samples **R1** and **A**. The difference in temperature evolution is clearly visible. Due to the presence of the acrylate (SR399; 10 wt.% of total weight of the resin component), the peak temperature of sample **A** (≈ 55°C) is well below the peak temperature of reference sample **R1** (≈ 90°C).

As shown in Fig. 2, this results in a less yellow discoloration for sample **A** (left side of Fig. 2) when compared with the reference sample **R1** (right side of Fig. 2).

### Example 2

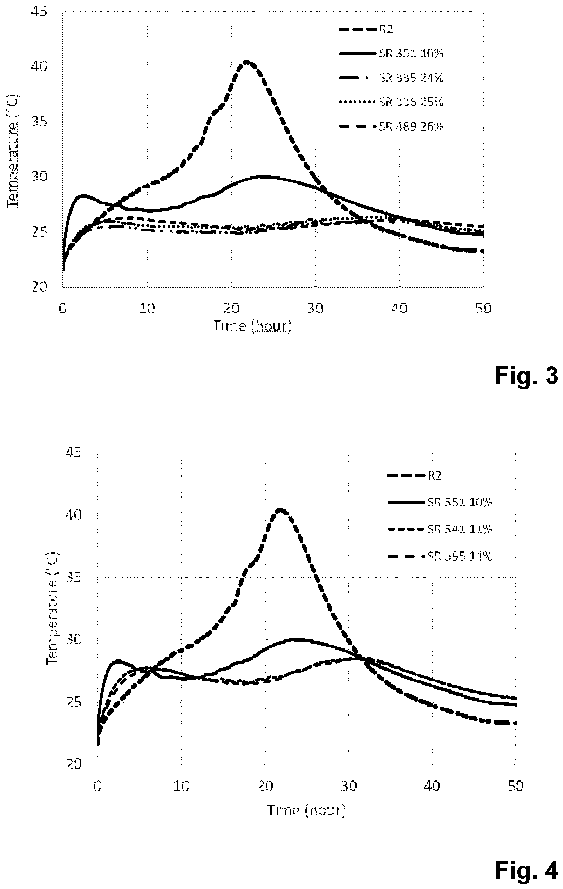

Experiments similar to example 1 were performed with other acrylates, i.e. monoacrylates, diacrylates and polyacrylates. The specific types of the acrylates used, and the proportions of the epoxy resin and reactive diluent replaced by the acrylates are indicated in Fig. 3, 4 and 5 (proportions in wt.% with respect to the total weight of the resin component).

Fig. 3, 4 and 5 show the temperature evolution over time for these samples. **R2** is a reference sample which is essentially identical to sample **R1**. Please note that absolute temperatures between example 1 and 2 cannot be compared because of different experimental conditions.

As shown in Fig. 3 to 5, with all of the tested acrylates the peak temperature can be lowered significantly when compared to the reference sample **R2**.

### Example 3

A resin component and a hardener component as indicated in table 3 were provided in separate receptacles at room temperature (total batch size: 1.2 kg). Then the two components were mixed together in order to start the curing process and poured into a conical mould with an inner depth of about 12 cm. During the curing process, the temperature evolution over time was measured with a thermocouple in the center of the curing epoxy resin composition.

**Table 3 (proportions in wt.%)**

| **Component** | **Constituent** | **R3*** | **R4*** | **B** |
|---|---|---|---|---|
| **Resin** | BADGE | 80 | 80 | 80 |
| | G8 | 20 | 20 | 0 |
| | SR489 | 0 | 0 | 20 |
| **Hardener** | T403 | 100 | 82 | 100 |
| | PN | 0 | 18 | 0 |
| **Ratio¹⁾** | | 100/45 | 100/50 | 100/45 |

| | | | | |
|---|---|---|---|---|
| * = reference sample ¹⁾ = Weight ratio of resin component to hardener component | | | | |

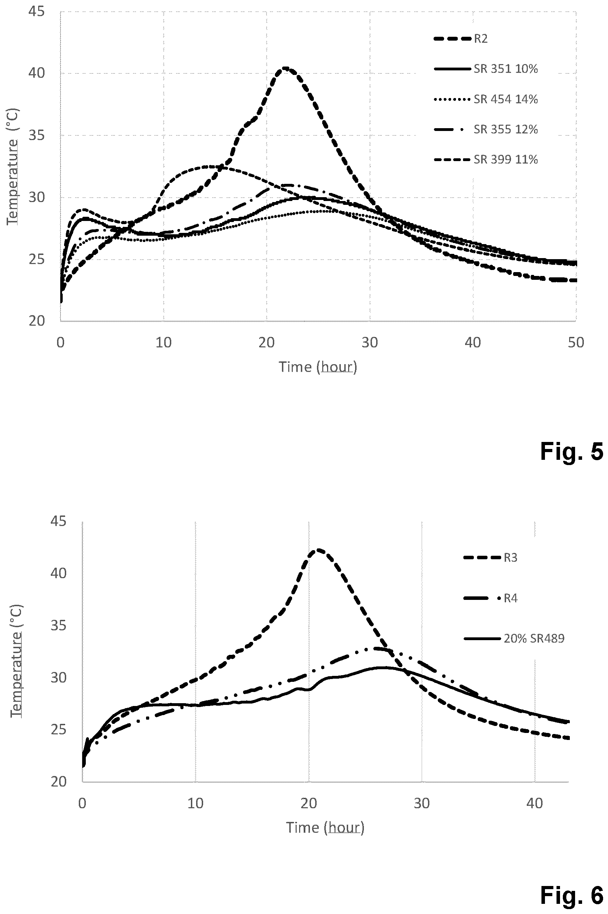

Fig. 6 shows the temperature evolution over time for the two reference samples **R3, R4** and sample **B.** The difference in temperature evolution is clearly visible. Due to the presence of the acrylate (SR489), the peak temperature of sample **B** is well below the peak temperature of reference sample **R3** as well as lower than reference sample **R4**.

Noteworthy, reference sample **R4** has a lower proportion of the amine compound in the hardener component. This results in a delayed curing when compared to reference sample **R3**.

In order to assess processing properties of the epoxy compositions of table 3 and the mechanical properties of the articles produced with these compositions the viscosity, hardness and glass transition temperature (Tg) have been measured. Table 4 gives an overview of the results.

**Table 4**

| **Property** | **R3*** | **R4*** | **B** |
|---|---|---|---|
| **Viscosity¹⁾ [mPa.s]** | 366 | 330 | 304 |
| **Hardness (Shore D)²⁾** | 78 | 75 | 75 |
| **Tg [°C]³⁾** | - | 42 | 45 |

| | | | |
|---|---|---|---|
| * = reference sample ¹⁾ Viscosity of the components directly after mixing; measured with a RM 200 rheometer (Lamy Rheology) at a shear rate of 2'000s⁻¹ and a temperature of 25°C. ²⁾ After 7 days at 23°C ³⁾ measured by thermomechanical analysis (TMA) in line with ISO 11359-2:2021-11 | | | |

As evident from the data presented in table 4, although with the acrylates (sample **B**) the lowest peak temperature is obtainable, the acrylates do not affect the processing and mechanical properties.

### Example 4

While the difference in peak temperature between reference sample **R4** and sample **B** (with 20 wt.% SR489) in experiment 3 (Fig. 6) might look small, this effect is highly important when it comes to higher application volumes or higher layer thicknesses.

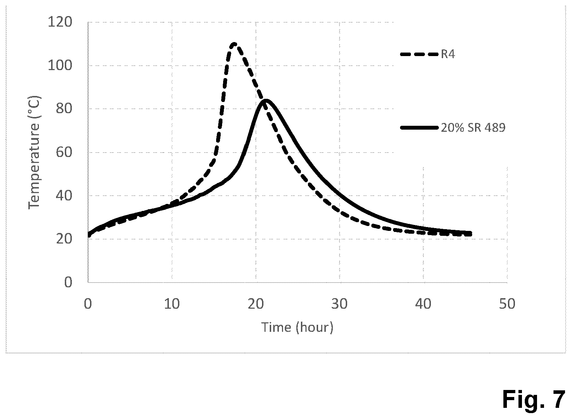

Fig. 7 show the temperature evolution over time for the two samples **R4** and **B** whereby a batch size of 8 kg (instead of the 1.2 kg of example 3) was provided produced and poured into a mold. Thereby a layer thickness of the epoxy resin composition of 100 mm was obtained.

As evident from Fig. 7, the use of acrylates clearly is beneficial since the peak temperature can be lowered by more than 25°C resulting in a more homogeneous cured article.

It will be appreciated by those skilled in the art that the present invention can be embodied in other specific forms without departing from the spirit or essential characteristics thereof. The presently disclosed embodiments are therefore considered in all respects to be illustrative and not restricting.

## Claims

1. An epoxy resin composition comprising:
a) a resin component comprising at least one epoxy resin and at least one acrylate compound, whereby a weight ratio of the at least one acrylate compound to the at least one epoxy resin is from 0.01 - 1, especially 0.05 - 0.7, in particular 0.1 - 0.5;
b) a hardener component comprising at least one amine compound having at least one amine group selected from primary amine groups, secondary amine groups and/or blocked amine groups.

2. The epoxy resin composition according to claim 1 whereby the at least one acrylate compound is an aliphatic alkyl acrylate, whereby the aliphatic alkyl group of the alkyl acrylate may be branched or unbranched and optionally comprise one or more heteroatoms, in particular oxygen, and wherein the acrylate compound comprises 1 - 5, especially 1 - 3, in particular 1 - 2, acryl groups.

3. The epoxy resin composition according to any of preceding claims, whereby the at least one acrylate compound is selected from:
- monoacrylates, selected from lauryl acrylate, C₁₂-C₁₄ alkyl acrylate, and/or tridecyl acrylate;
- diacrylates, selected from 3-methyl 1,5-pentanediol diacrylate, and/or 1,10-decanediol diacrylate;
- triacrylates, selected from trimethylolpropane triacrylate, pentaerythritol triacrylate and/or ethoxylathed 3-trimethylolpropane triacrylate
- tetraacrylates, selected from pentaerythritol tetraacrylate and/or ditrimethylolpropane tetraacrylate;
and/or
- pentaacralytes, selected from dipentaerythritol pentaacrylate.

4. The epoxy resin composition according to any of preceding claims, whereby the epoxy resin is selected from the group consisting of a bisphenol A-diglycidyl ether, a bisphenol F-diglycidyl ether and/or a bisphenol A/F-diglycidyl ether.

5. The epoxy resin composition according to any of preceding claims, whereby the epoxy resin further comprises an epoxy functional reactive diluent, particularly selected from the group consisting of butandiol diglycidyl ether, neopentylglycol diglycidyl ether, hexandiol diglycidyl ether, cyclohexanedimethanol diglycidyl ether, trimethylolpropane di- or triglycidyl ether, phenyl glycidyl ether, cresyl glycidyl ether, guiacol glycidyl ether, 4-methoxyphenyl glycidly ether, p-n-butylphenyl glycidyl ether, p-tert.butylphenyl glycidyl ether, 4-nonylphenyl glycidyl ether, 4-dodecylphenyl glycidyl ether, cardanol glycidyl ether, benzyl glycidyl ether, allyl glycidyl ether, butyl glycidyl ether, hexyl glycidyl ether, 2-ethylhexyl glycidyl ether and glycidyl ethers of natural alcohols such as C8 to C10 alcohols, C12 to C14 alcohols and C13 to C15 alcohols.

6. The epoxy resin composition according to any of preceding claims, whereby the at least one amine compound is an aliphatic, cycloaliphatic or arylaliphatic polyamine with (i) at least two primary amine groups or (ii) with at least one primary and at least one secondary amine group, especially the at least one amine compound is a polyoxypropylene triamine, e.g. with an average molecular weight in the range of 300 to 500 g/mol.

7. The epoxy resin composition according to any of preceding claims, whereby a weight proportion of the at least one epoxy resin to the sum of the weight of the at least one acrylate compound and the optional diluent is > 50 wt.%, especially > 60 wt.%, in particular > 65 wt.%, for example 70 - 95 wt.%.

8. The epoxy resin composition according to any of preceding claims, whereby the resin component, with respect to the total weight of the resin component, comprises:
(i) 50 - 99 wt.%, especially 60 - 95 wt.%, in particular 70 - 92 wt.%, for example 75 - 85 wt.%, of the at least one epoxy resin;
(ii) 1 - 50 wt.%, especially 5 - 40 wt.%, in particular 8-30 wt.%, for example 15 - 25 wt.%, of the at least one acrylate compound;
(iii) 0 - 40 wt.%, especially 1 - 30 wt.%, in particular 5 - 28 wt.%, for example 15 - 25 wt.%, of the diluent.

9. The epoxy resin composition according to any of preceding claims, whereby a weight ratio between the hardener component and the resin component is in the range from 1:10 to 10:1, especially 2:10 to 10:10, in particular 3:10 to 6:10, for example 3.5:10 to 5:10.

10. The epoxy resin according to any of preceding claims, a molar ratio of the sum of the acryl groups (CH₂=CHCOO-) of the at least one acrylate compound and the epoxy groups of the at least one epoxy resin and any further groups that are reactive towards the amine groups of the at least one amine compound, especially the optional epoxy functional reactive diluent, to the number of amine groups of the at least one amine compound is in the range of 0.5 to 1.5, particularly 0.7 to 1.2.

11. The epoxy resin composition according to any of preceding claims, whereby the epoxy resin composition is formulated such that in cured state it is transparent for light in the visible spectrum.

12. Method for casting an article comprising the steps of:
(i) mixing the components of the epoxy resin composition as described in any of preceding claims,
(ii) pouring the mixed composition within its pot life into a mould in a layer thickness of at least 1 mm, especially in the range of 5 to 200 mm,
(iii) optionally mixing another portion of the components of the epoxy resin composition as described in step (i), followed by pouring another layer of the mixed composition within its pot life onto the already applied, at least partly cured layer,
(iv) optionally repeating step (iii) until the article has reached its desired thickness,
(v) curing the cast article.

13. Method according to claim 12, wherein in step (ii) the mixed composition is poured into the mould in a layer thickness of at least 50 mm, in particular at least 100 mm.

14. An article, preferably selected from the group consisting of a painting, a collage, a paperweight, a decorative globe, a tray, a decorative dish, a table board and a side table, comprising an epoxy resin composition according to any of claims 1 to 12 in cured state or comprising a cured epoxy resin composition obtainable by the method according to any of claims 12 to 13.

15. Use of at least one acrylate compound for controlling, especially for reducing, the heat evolution during a curing process of an epoxy resin composition comprising a) a resin component comprising at least one epoxy resin and b) a hardener component comprising at least one amine compound having at least one amine group selected from primary amine groups, secondary amine groups and/or blocked amine groups.
